# EUROPEAN PATENT APPLICATION

(11) **EP 4 585 870 A1**
(43) Date of publication of application: **16.07.2025**
(21) Application number: 23876201.7
(22) Date of filing: 14.06.2023
(51) Int. Cl.: F25B 30/02

(54) **PHASE-CHANGE HEAT PUMP SYSTEM AND TERMINAL DEVICE**

(30) Priority: 13.10.2022 CN 202211255855
(71) Applicant: Guangdong Midea White Home Appliance Technology Innovation Center Co., Ltd., Foshan, Guangdong 528311 (CN); Midea Group Co., Ltd., Foshan, Guangdong 528311 (CN)
(72) Inventor: WANG, Wenpeng, Foshan, Guangdong 528311 (CN)
(74) Representative: Ran, Handong
(86) International application number: PCT/CN2023/100226
(87) International publication number: WO 2024/077990

(57) **Abstract**

The present application belongs to the technical field of mechanical design. Disclosed are a phase change heat pump system and a terminal device. The phase-change heat pump system comprises a reversing device, a first heat exchanger, a second heat exchanger, a compressor and a phase-change heat exchanger, wherein the compressor, the first heat exchanger and the second heat exchanger are in communication by means of the reversing device. The phase-change heat exchanger comprises a first box body and a phase-change material, wherein the first box body is filled with the phase-change material; and the phase-change heat exchanger is in contact and in thermal communication with the first heat exchanger. When the reversing device is in a first working state, an air suction port is in communication with the first heat exchanger, and an air discharge port is in communication with the second heat exchanger; and when the reversing device is in a second working state, the air suction port is in communication with the second heat exchanger, and the air discharge port is in communication with the first heat exchanger. By using the solution, the first heat exchanger can actively heat the phase-change material, such that, compared with the related art, the solution significantly shortens the regeneration time for the phase-change material, thereby being beneficial to improving the working efficiency of the phase-change heat pump system.

## Description

### CROSS-REFERENCE TO RELATED APPLICATION

This application claims priority to Chinese Patent Application No. 202211255855.X, filed on October 13, 2022 and entitled "PHASE-CHANGE HEAT PUMP SYSTEM AND TERMINAL DEVICE," the disclosure of which is incorporated herein by reference in its entirety.

### TECHNICAL FIELD

The present application relates to the field of heat pump system, and in particular to a phase-change heat pump system and a terminal device.

### BACKGROUND

Phase-change materials are utilized in heat pump systems due to their characteristics of having high thermal conductivity, large specific heat capacity, the capability of storing or releasing a significant amount of heat, being reusable, etc.

In a heat pump system, a phase-change material is usually cooperated with an evaporator, and when the evaporator is working, it absorbs the heat stored in the phase-change material, the phase-change material changes from liquid to solid after releasing heat. As the heat in the phase-change material decreases, the efficiency of the evaporator will decline. When the phase-change material transitions to a solid state, it is usually necessary to stop the operation of the evaporator and heat the phase-change material.

However, the methods used to heat the phase-change material are typically passive heating methods, such as natural air heating, circulating water heating, etc. The efficiency of passive heating is relatively low, as the phase-change material takes a considerable amount of time to transition from solid to liquid, ultimately resulting in low operational efficiency for the heat pump system.

### SUMMARY

Embodiments of the present application provide a phase-change heat pump system and a terminal device that can solve the problem of low operational efficiency in heat pump systems caused by the use of passive heating methods for phase-change materials in the related art. The technical scheme provided by the application is as follows.

In accordance with a first aspect of the present application, a phase-change heat pump system is provided, including: a reversing device, a first heat exchanger, a second heat exchanger, a compressor, and a phase-change heat exchanger, where
the reversing device has a first reversing port, a second reversing port, a third reversing port, and a fourth reversing port;
the first heat exchanger has a first heat exchange port, and a second heat exchange port in communication with the first reversing port;
the second heat exchanger has a third heat exchange port in communication with the second heat exchange port, and a fourth heat exchange port in communication with the second reversing port;
the compressor has an air intake port in communication with the third reversing port, and an air exhaust port in communication with the fourth reversing port;
the phase-change heat exchanger includes a first chamber in which a phase-change material is contained for heat exchange with the first heat exchanger; and
when the reversing device is in a first operation state, the air intake port is in communication with the first heat exchanger, and the air exhaust port is in communication with the second heat exchanger, and when the reversing device is in a second operation state, the air intake port is in communication with the second heat exchanger, and the air exhaust port is in communication with the first heat exchanger.

In a possible implementation, the first heat exchanger is located inside the first chamber, such that a first space is formed between the first heat exchanger and the first chamber. The phase-change material is disposed in the first space with at least a portion of the first heat exchanger being immersed in the phase-change material.

In a possible implementation, the phase-change heat pump system includes a water circulation subsystem, and the water circulation subsystem includes a water tank, a second chamber, a circulation water pump, and a spray arm, where
the water tank, the second chamber, and the circulation water pump are in communication with each other, and the second chamber is in thermal communication with the second heat exchanger; and
when the reversing device is in the first operation state, the water tank is not in communication with the circulation water pump, and the circulation water pump is in communication with the spray arm, and when the reversing device is in the second operation state, the water tank is in communication with the circulation water pump, and the circulation water pump is not in communication with the spray arm.

In a possible implementation, the water circulation subsystem includes a reversing valve. The reversing valve is connected to the water tank, the circulation water pump, and the spray arm, respectively.

In a possible implementation, the water circulation subsystem includes a third chamber, where
the third chamber is in communication with the circulation water pump and is connected to the water tank; and
the water tank is not in communication with the third chamber when the reversing device is in the first operation state, and the third chamber is in communication with the water tank when the reversing device is in the second operation state.

In a possible implementation, the water circulation subsystem includes a second check valve. The second check valve is in communication with the water tank and the third chamber, respectively.

In a possible implementation, circulating water sprayed out by the spray arm returns to the water tank. The water circulation subsystem further includes a drainage pump and a drainage pipeline.

The drainage pump is in communication with the water tank and the drainage pipeline, respectively, with at least a portion of the drainage pipeline passing through the third chamber.

In a possible implementation, the phase-change heat exchanger includes an auxiliary heat exchange assembly. The auxiliary heat exchange assembly includes a fourth chamber and a heat exchange medium, the heat exchange medium is disposed in the fourth chamber, and the auxiliary heat exchange assembly is configured for heat exchange with the phase-change heat exchanger.

In a possible implementation, the first chamber is located inside the fourth chamber, such that a third space is formed between the first chamber and the fourth chamber, in which the heat exchange medium is disposed and at least a portion of the first chamber is immersed in the heat exchange medium.

In accordance with a second aspect of the present application, a terminal device is provided, including a phase-change heat pump system as described in the first aspect or any one of its possible implementations.

In a possible implementation, the terminal device is a washing device, the washing device further includes a base, a housing, and a partition; and
the partition is located between the base and the housing, such that a receiving cavity is formed between the partition and the base, the phase-change heat pump system is located within the receiving cavity, such that a washing cavity is formed between the partition and the housing for washing target items.

The beneficial effects brought by the technical scheme according to the embodiments of the present application are as follows.

In the scheme according to the embodiments of the present application, the compressor, the first heat exchanger, and the second heat exchanger are in communication with each other via the reversing device. By adjusting the operation state of the reversing device, the communication path between the compressor, the first heat exchanger, and the second heat exchanger can be changed, so as to switch functions of the first heat exchanger and the second heat exchanger. When the reversing device is in the first operation state, and the phase-change material releases heat and transitions from liquid to solid, the reversing device can be adjusted to the second operation state, such that the first heat exchanger is switched from an evaporator to a condenser, thereby actively heating the phase-change material by the first heat exchanger. By adopting this scheme, the method of actively heating the phase-change material by the first heat exchanger has a higher heating efficiency compared to the passive heating methods (natural air heating, circulating water heating, air heating, etc.) in the related art, significantly shortening the regeneration time of the phase-change material, which is beneficial for improving the operational efficiency of the phase-change heat pump system.

It is understood that the foregoing summary and the following detailed description are exemplary and illustrative only and do not limit the present application.

### BRIEF DESCRIPTION OF DRAWINGS

In order to more clearly illustrate technical schemes in embodiments of the present application, the accompanying drawings used in description of the embodiments will be briefly described below, and obviously, the accompanying drawings in the following description show only some embodiments of the present application, and for those of ordinary skill in the art, other drawings can be derived on the basis of these drawings without any inventive effort.
FIG. 1 is a schematic diagram of a phase-change heat pump system according to an embodiment of the present application;
FIG. 2 is a schematic diagram of a phase-change heat pump system according to an embodiment of the present application;
FIG. 3 is a partial schematic diagram of a phase-change heat pump system according to an embodiment of the present application;
FIG. 4 is a partial schematic diagram of a phase-change heat pump system according to an embodiment of the present application;
FIG. 5 is a partial schematic diagram of a phase-change heat pump system according to an embodiment of the present application;
FIG. 6 is a partial schematic diagram of a phase-change heat pump system according to an embodiment of the present application;
FIG. 7 is a partial schematic diagram of a phase-change heat pump system according to an embodiment of the present application; and
FIG. 8 is a schematic diagram of a phase-change heat pump system according to an embodiment of the present application.

List of reference numerals as follows:
1 Reversing device; 2 First heat exchanger; 3 Second heat exchanger; 4 Compressor; 5 Phase-change heat exchanger; 6 Water circulation subsystem;
11 First reversing port; 12 Second reversing port; 13 Third reversing port; 14 Fourth reversing port; 21 First heat exchange port; 22 Second heat exchange port; 31 Third heat exchange port; 32 Fourth heat exchange port; 4A Air intake port; 4B Air exhaust port; 51 First chamber; 52 Phase-change material; 53 Auxiliary heat exchange assembly; 61 Water tank; 62 Second chamber; 63 Circulation water pump; 64 Spray arm; 65 Reversing valve; 66 Third chamber; 67 Second check valve; 68 Drainage pump; 69 Drainage pipeline;
531 Fourth chamber; 532 Heat exchange medium.

### DETAILED DESCRIPTION OF EMBODIMENTS

Unless otherwise defined, technical terms or scientific terms used herein shall have the typical meaning understood by those of ordinary skill in the art to which the present disclosure pertains. The terms "first," "second," "third," and similar terms used in the description and the claims of the present disclosure do not denote any order, quantity, or importance, but are only used to distinguish different components. Likewise, the terms "one," "a/an," etc. are not intended to limit the quantity, but rather denote the presence of at least one. Terms such as "include" or "comprise" indicate that the elements or objects appear before encompassing those listed after "include" or "comprise" and their equivalents, and do not exclude other elements or objects. Terms such as "connect" or "couple" are not limited to physical or mechanical connections, but may also include electrical connections, whether direct or indirect. Terms such as "up," "down," "left," and "right" are used solely to indicate relative positional relationships, which may change accordingly when the absolute position of the object described changes.

A heat pump system typically includes components such as a compressor, a condenser, and an evaporator, with the compressor, condenser, and evaporator being in communication with each other. The compressor sucks gas of lower temperature, pressure from the evaporator and delivers gas of higher temperature, pressure to the condenser, where the gas of higher temperature, pressure releases heat outside and condenses into a liquid state. The condensed liquid flows into the evaporator, where it absorbs heat and evaporates to form the lower temperature, pressure gas. To ensure the operational efficiency of the evaporator, a heat exchange medium is usually provided at the evaporator to supply heat for the evaporator. Due to the characteristics of phase-change materials, such as high thermal conductivity, high specific heat capacity, ability to store or release a large amount of heat, and reusability, phase-change materials are used as heat exchange media in heat pump systems.

In a heat pump system, the evaporator absorbs the heat stored in the phase-change material during operation, causing the phase-change material to release heat and transition from liquid to solid. As the heat in the phase-change material decreases, the efficiency of the evaporator will decline. When the phase-change material transitions to a solid state, it can no longer provide heat to the evaporator, and at this point, the evaporator cannot evaporate the condensed liquid into the lower temperature, pressure gas, resulting in the entire heat pump system being unable to operate normally. In this case, it is necessary to heat the phase-change material to convert it from solid to liquid in order to store the heat required for the operation of the evaporator.

However, in the related art, the methods used to heat the phase-change material are typically passive heating methods, such as natural air heating, circulating water heating, etc. When using passive heating, the phase-change material takes a considerable amount of time to transition from solid to liquid, such as 10 hours, 12 hours, or even 24 hours, severely affecting the operational efficiency of the heat pump system utilizing the phase-change material.

Therefore, the embodiments of the present application provide a phase-change heat pump system that can significantly shorten the time taken for the phase-change material to transition from solid to liquid, thereby improving the operational efficiency of the heat pump system. To make the purposes, technical schemes, and advantages of the present application clearer, the following will provide a further detailed description of the embodiments of the present application with reference to the accompanying drawings.

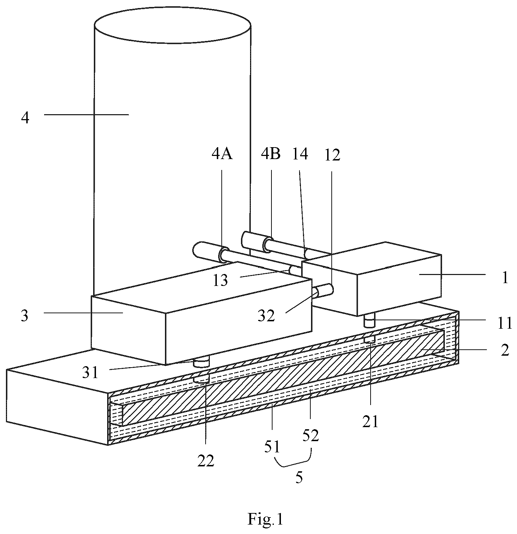

FIG. 1 is a schematic diagram of a phase-change heat pump system according to an embodiment of the present application. As shown in FIG. 1, the phase-change heat pump system according to the embodiment of the present application includes a reversing device 1, a first heat exchanger 2, a second heat exchanger 3, a compressor 4, and a phase-change heat exchanger 5.

The reversing device 1 has four ports, which are a first reversing port 11, a second reversing port 12, a third reversing port 13, and a fourth reversing port 14. In an embodiment, the reversing device 1 may be a four-way reversing valve, or a cam reversing device, etc. The reversing device 1 can be an equipment known in the art, and the specific structure of the reversing device 1 will not be elaborated herein. The reversing device 1 is configured to adjust the communication relationship between the first heat exchanger 2, the second heat exchanger 3, and the compressor 4 in the phase-change heat pump system, which will be explained in detail below.

The first heat exchanger 2 has a first heat exchange port 21 and a second heat exchange port 22. The second heat exchanger 3 has a third heat exchange port 31 and a fourth heat exchange port 32. The first heat exchange port 21 of the first heat exchanger 2 is in communication with the first reversing port 11 of the reversing device 1, the second heat exchange port 22 of the first heat exchanger 2 is in communication with the third heat exchange port 31 of the second heat exchanger 3, and the fourth heat exchange port 32 of the second heat exchanger 3 is in communication with the second reversing port 12 of the reversing device 1.

In some embodiments, the heat pump system may also include a throttle valve, which is in communication with the first heat exchanger 3 and the second heat exchanger 4, respectively, and the throttle valve is configured to control the flow rate of the medium between the first heat exchanger 3 and the second heat exchanger 4, which will not be elaborated here.

The compressor 4 has an air intake port 4A and an air exhaust port 4B, with the air intake port 4A being in communication with the third reversing port 13 of the reversing device 1 and the air exhaust port 4B being in communication with the fourth reversing port 14 of the reversing device 1. Thus, any two of the first heat exchanger 2, the second heat exchanger 3, and the compressor 4 are interconnected through the reversing device 1.

The phase-change heat exchanger 5 may include a first chamber 51 and a phase-change material 52, with the phase-change material 52 being filled in the first chamber 51. The phase-change heat exchanger 5 is in contact with the first heat exchanger 2, and the phase-change heat exchanger 5 is in thermal communication with the first heat exchanger 2. The thermal communication here can also be referred to as thermal coupling, indicating that heat exchange can occur between the phase-change heat exchanger 5 and the first heat exchanger 2.

The phase-change material 52 may be a solid-liquid phase-change energy storage material. Usually, when the phase-change material 52 transitions from liquid to solid, it releases heat to the outside to play a role in heating and heat preservation, while when the phase-change material 52 transitions from solid to liquid, it absorbs external heat to play a role in cooling and heat storage.

In an embodiment, the phase-change material 52 may be an inorganic phase-change material. The phase-change material 52 may be water, or the phase-change material 52 may be sodium sulfate compounds, such as sodium sulfate hydrate added with an anti-phase separation agent. Alternatively, the phase-change material 52 may be sodium acetate compounds, such as sodium acetate trihydrate added with an anti-phase separation agent. Alternatively, the phase-change material 52 may be calcium chloride compounds, such as calcium chloride hydrate. Alternatively, the phase-change material 52 may be phosphate compounds, such as disodium hydrogen phosphate dodecahydrate.

In an embodiment, the phase-change material 52 may also be an organic phase-change material. The phase-change material 52 may be paraffin or fatty acids.

When the reversing device 1 is in the first operation state, the air intake port 4A is in communication with the first heat exchanger 2, and the air exhaust port 4B is in communication with the second heat exchanger 3. At this point, in the phase-change heat pump system, the first heat exchanger 2 corresponds to an evaporator in the related art, and is used for evaporating the condensed liquid to form the lower temperature, pressure gas and delivering it to the compressor 4; the second heat exchanger 3 corresponds to a condenser in the related art, and is used for condensing the higher temperature, pressure gas discharged from the compressor 4 into liquid and delivering the condensed liquid to the first heat exchanger 2. In this case, the first heat exchanger 2 absorbs the heat stored in the phase-change material 52 of the phase-change heat exchanger 5, causing the phase-change material 52 to transition from liquid to solid.

When the reversing device 1 is in the second operation state, the air intake port 4A is in communication with the second heat exchanger 3, and the air exhaust port 4B is in communication with the first heat exchanger 2. At this point, in the phase-change heat pump system, the second heat exchanger 3 corresponds to an evaporator in the related art, and is used for evaporating the condensed liquid to form the lower temperature, pressure gas and delivering it to the compressor 4; the first heat exchanger 2 corresponds to a condenser in the related art, and is used for condensing the higher temperature, pressure gas discharged from the compressor 4 into liquid and delivering the condensed liquid to the second heat exchanger 3. In this case, the second heat exchanger 3 heats the phase-change material 52 of the phase-change heat exchanger 5 to cause the phase-change material 52 to transition from solid to liquid, thereby achieving the regeneration of the phase-change material 52 and heat storage.

In the scheme according to the embodiments of the present application, the reversing device 1 is in the first operation state until the phase-change material 52 transitions to solid, the reversing device 1 is adjusted to the second operation state, so as to allow the first heat exchanger 2 to heat the phase-change material 52, thereby achieving the active heating of the phase-change material 52. By adopting this scheme, the method of actively heating the phase-change material by the first heat exchanger has a higher heating efficiency compared to the passive heating methods (natural air heating, circulating water heating, air heating, etc.) in the related art, significantly shortening the regeneration time of the phase-change material 52, which is conducive to improving the operational efficiency of the phase-change heat pump system.

In some embodiments, as shown in FIG. 1, the first heat exchanger 2 is located in the first chamber 51 of the phase-change heat exchanger 5, and a first space is formed between the first heat exchanger 2 and inner walls of the first chamber 51, with the phase-change material 52 being disposed in the first space. Moreover, at least a portion of the first heat exchanger 2 is in contact with the phase-change material 52, meaning that at least a portion of the first heat exchanger 2 is immersed in the liquid phase-change material 52 (or wrapped by the solid phase-change material 52), and the phase-change material 52 is used for heat exchange with the first heat exchanger 2. By way of example, the first heat exchanger 2 is completely immersed in the liquid phase-change material 52 (or wrapped by the solid phase-change material 52), which is conducive to increasing the heat exchange area between the first heat exchanger 2 and the phase-change material 52, thereby improving the heat exchange efficiency between the first heat exchanger 2 and the phase-change material 52, and further improving the operational efficiency of the phase-change heat pump system.

In some other embodiments, the first heat exchanger 2 is located outside the first chamber 51, and the surface of the first heat exchanger 2 is in contact with the first chamber 51. The first heat exchanger 2 and the phase-change material 52 exchange heat through the first chamber 51. This structure facilitates the production of the first heat exchanger 2 and the phase-change heat exchanger 5, and also helps to reduce the assembly difficulty between the first heat exchanger 2 and the phase-change heat exchanger 5.

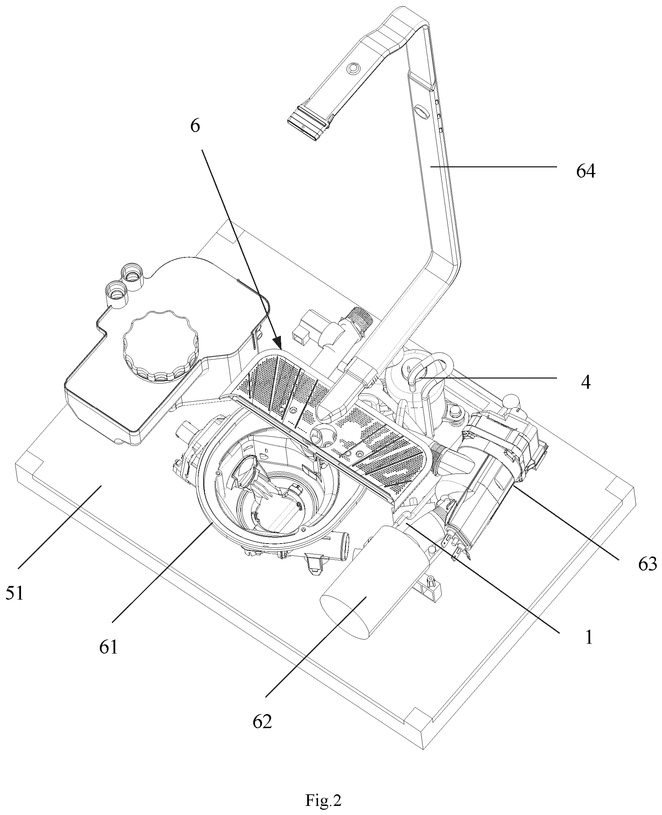

FIG. 2 is a schematic diagram of a phase-change heat pump system according to an embodiment of the present application. As shown in FIG. 2, the phase-change heat pump system may further include a water circulation subsystem 6. The water circulation subsystem 6 may include a water tank 61, a second chamber 62, a circulation water pump 63, and a spray arm 64. The water tank 61, the second chamber 62, and the circulation water pump 63 are in communication with each other. The second chamber 62 is in thermal communication with the second heat exchanger 3, which means that the second chamber 62 and the second heat exchanger 3 can exchange heat.

In an embodiment, the water tank 61, the second chamber 62, and the circulation water pump 63 may be in communication with each other in sequence, and the circulation water pump 63 is respectively connected to the water tank 61 and the spray arm 64. In another embodiment, the circulation water pump 63 may be located between the water tank 61 and the second chamber 62, meaning that the circulation water pump 63 is in communication with the water tank 61 and the second chamber 62, respectively, while the second chamber 62 is in communication with the circulation water pump 63 and also connected to the spray arm 64. No specific limitations are placed herein on the connection sequence of the water tank 61, second chamber 62, circulation water pump 63, and spray arm 64.

When the reversing device 1 is in the first operation state, the water tank 61 is not in communication with the circulation water pump 63, while the circulation water pump 63 is in communication with the spray arm 64. The circulating water in the water tank 61 first reaches the second chamber 62, where it is heated under the action of the second heat exchanger 3. The heated circulating water from the second chamber 62 then enters the spray arm 64 via the circulation water pump 63, and the spray arm 64 sprays the heated circulating water out under the action of the circulation water pump 63.

When the reversing device 1 is in the second operation state, the water tank 61 is in communication with the circulation water pump 63, while the circulation water pump 63 is not in communication with the spray arm 64. The circulating water in the water tank 61 reaches the second chamber 62, where it transfers heat to the second heat exchanger 3. The cooled circulating water then returns to the water tank 61 via the circulation water pump 63, forming a cycle that continuously provides heat to the second heat exchanger 3.

In some embodiments, an outer surface of the second heat exchanger 3 is in contact with an outer surface of the second chamber 62. When the reversing device 1 is in the first operation state, the heat generated from the higher temperature, pressure gas by condensing in the second heat exchanger 3 is transferred to the circulating water via the second chamber 62, thereby the circulating water is heated. When the reversing device 1 is in the second operation state, the heat in the circulating water is transferred to the second heat exchanger 3 via the second chamber 62 to facilitate the evaporation process in the second heat exchanger 3.

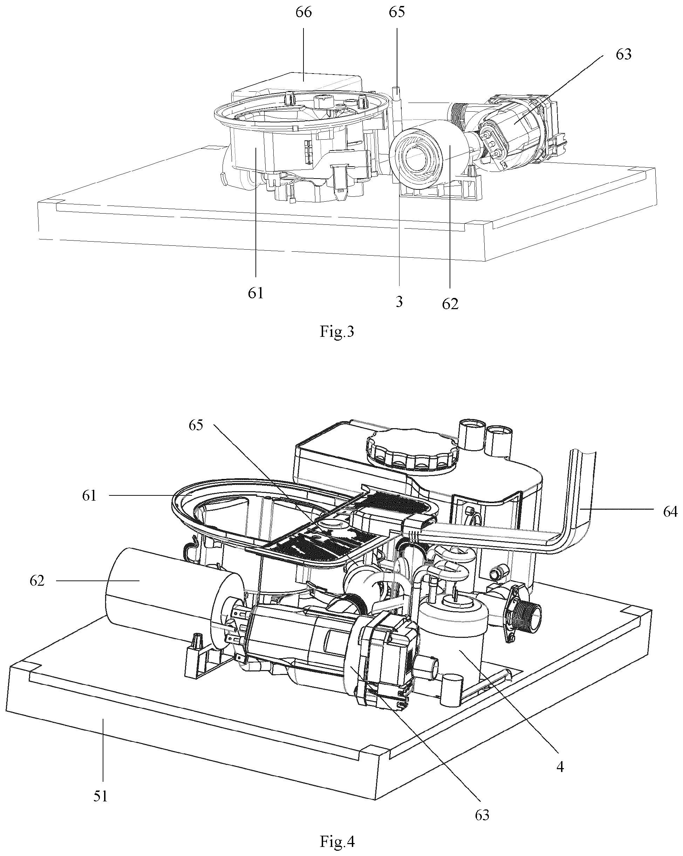

In another embodiment, FIG. 3 is a partial schematic diagram of a phase-change heat pump system according to an embodiment of the present application. As shown in FIG. 3, the second heat exchanger 3 is located inside the second chamber 62, such that a second space is formed between the second heat exchanger 3 and the second chamber 62, in which the circulating water is filled and at least a portion of the second heat exchanger 3 is immersed in the circulating water. In this case, the second heat exchanger 3 can directly exchange heat with the circulating water, and the fact that the second heat exchanger 3 being immersed in the circulating water can increase the heat exchange area, thereby helping to improve the heat exchange efficiency.

FIG. 4 is a partial schematic diagram of a phase-change heat pump system according to an embodiment of the present application. In some embodiments, as shown in FIG. 4, the water circulation subsystem 6 further includes a reversing valve 65. The reversing valve 65 is connected to the water tank 61, circulation water pump 63, and spray arm 64, respectively, and is configured to enable/disable the communication between the circulation water pump 63, the water tank 61, and the spray arm 64. When the reversing device 1 is in the first operation state, the reversing valve 65 enables the communication between the circulation water pump 63 and the spray arm 64, while disabling the communication between the circulation water pump 63 and the water tank 61; and when the reversing device 1 is in the second operation state, the reversing valve 65 enables the communication between the circulation water pump 63 and the water tank 61, while disabling the communication between the circulation water pump 63 and the spray arm 64.

In some other embodiments, the water circulation subsystem 6 may also include two first check valves, one first check valve for connecting the water tank 61 and the circulation water pump 63, and the other first check valve for connecting the circulation water pump 63 and the spray arm 64. The enabling/disabling of the communication between the circulation water pump 63, the water tank 61, and the spray arm 64 is similar to that described above and will not be elaborated further.

In another embodiment, the water circulation subsystem may include only one first check valve, which is configured to connect the circulation water pump 63 and the spray arm 64. In this case, the circulation water pump 63 is always in communication with the water tank 61. When the reversing device 1 is in the first operation state, the first check valve enables the communication between the circulation water pump 63 and the spray arm 64, allowing the circulating water to be sprayed out by the spray arm 64. When the reversing device 1 is in the second operation state, the first check valve disables the communication between the circulation water pump 63 and the spray arm 64, allowing the circulating water to circulate between the water tank 61, the second chamber 62, and the circulation water pump 63, thereby supplying heat to the second heat exchanger 3.

By adopting this scheme, on one hand, it may achieve the function of heating the circulating water in the water circulation subsystem 6 using the phase-change heat pump system; and on the other hand, heat can be provided to the second heat exchanger 3 while the first heat exchanger 2 heats the phase-change material 52, which is conducive to improving the operational efficiency of the second heat exchanger 3 during this process, thereby enhancing the heating efficiency of the phase-change material 52 by the first heat exchanger 2.

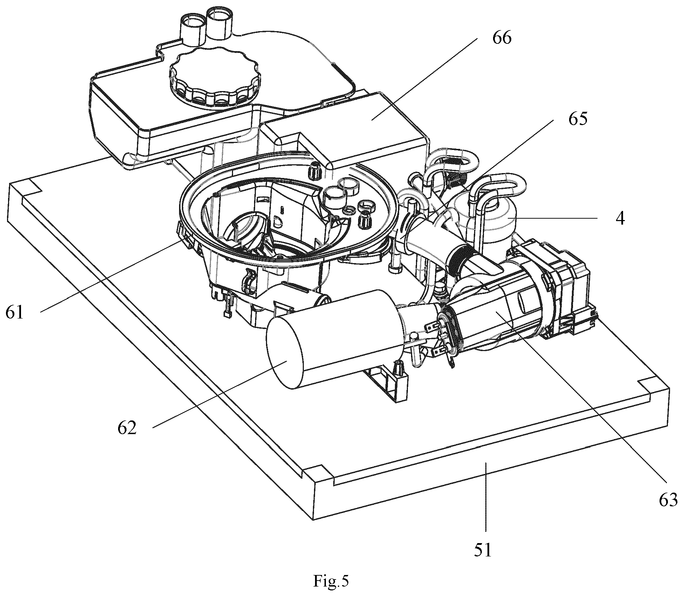

FIG. 5 is a partial schematic diagram of a phase-change heat pump system according to an embodiment of the present application. As shown in FIG. 5, the water circulation subsystem 6 may also include a third chamber 66. The water tank 61, the second chamber 62, the circulation water pump 63, and the third chamber 66 are sequentially in communication with each other, with the second chamber 62 not being in communication with the spray arm 64 (not shown in

FIG. 5), and the third chamber 66 being connected to the water tank 61.

In some embodiments, when the reversing device 1 is in the first operation state, the water tank 61 is not in communication with the third chamber 66 to ensure that there is sufficient pressure in the water circulation subsystem 6 for the circulating water to be sprayed out by the spray arm 64, thus achieving the corresponding utilization of the circulating water. When the reversing device 1 is in the second operation state, the circulation water pump 63 is not in communication with the spray arm 64, while the third chamber 66 is in communication with the water tank 61, allowing all the power generated by the circulation water pump 63 to be used to promote the circulation of the circulating water between the water tank 61, the second chamber 62, the circulation water pump 63, and the third chamber 66, increasing the circulation rate of the circulating water, which is conducive to improving the heat exchange efficiency with the second heat exchanger 3.

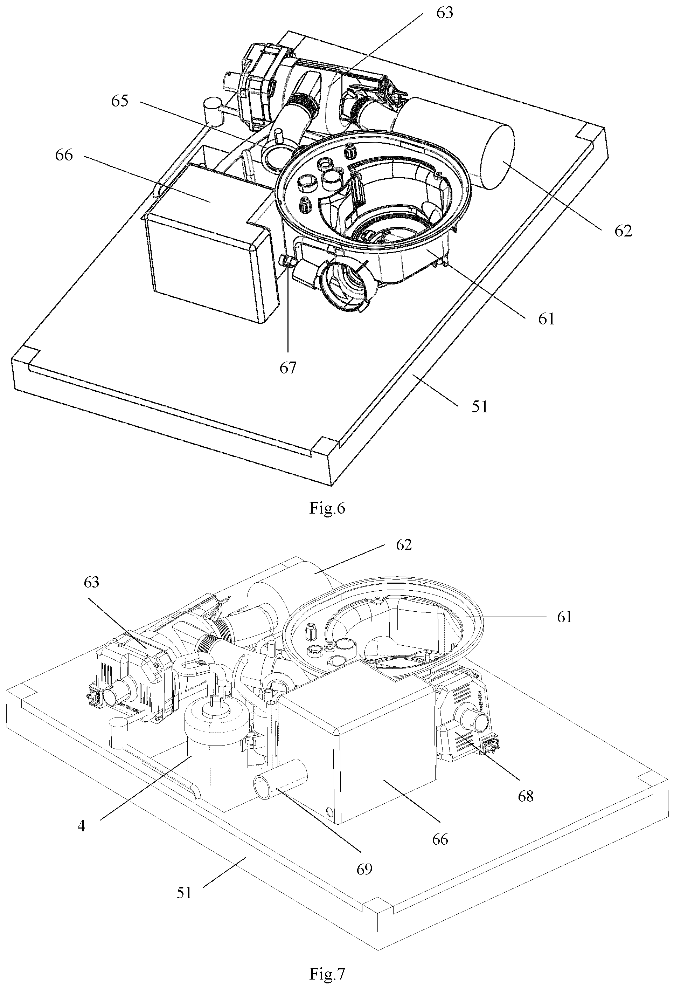

Regarding the connection relationship between the water tank 61 and the third chamber 66, FIG. 6 is a partial schematic exemplary diagram of a phase-change heat pump system according to an embodiment of the present application. As shown in FIG. 6, the water circulation subsystem 6 may also include a second check valve 67. Two ends of the second check valve 67 are in communication with the water tank 61 and the third chamber 66, respectively, such that the second check valve 67 is configured to enable/disable the communication between the third chamber 66 and the water tank 61. For example, when the reversing device 1 is in the first operation state, the second check valve 67 disables the communication between the water tank 61 and the third chamber 66, causing the circulating water flowing to the third chamber 66 to be temporarily stored in the third chamber 66; and when the reversing device 1 is in the second operation state, the second check valve 67 is in communication with the water tank 61 and the third chamber 66, and the circulating water stored in the third chamber 66 flows through the water tank 61 to the second chamber 62, facilitating the transfer of heat to the second heat exchanger 3 and promoting the evaporation efficiency within the second heat exchanger 3.

In some other embodiments, the third chamber 66 is always in communication with the water tank 61, regardless of whether the reversing device 1 is in the first operation state or the second operation state. The third chamber 66 is always in communication with the water tank 61, allowing circulating water to continuously cycle between the water tank 61, the second chamber 62, the circulation water pump 63, and the third chamber 66. In this way, regardless of whether the second heat exchanger 3 functions as a condenser or an evaporator, it can exchange heat with the circulating water in the second chamber 62, which is conducive to making full use of the heat from the second heat exchanger 3 or the circulating water, thereby improving energy utilization and enhancing the operational efficiency.

FIG. 7 is a partial schematic diagram of a phase-change heat pump system according to an embodiment of the present application. As shown in FIG. 7, the water circulation subsystem 6 also includes a drainage pump 68 and a drainage pipeline 69. The drainage pump 68 is in communication with a port of the water tank 61 and one end of the drainage pipeline 69, respectively, and at least a portion of the drainage pipeline 69 passes through the third chamber 66. In other words, at least a portion of the drainage pipeline 69 is located within the third chamber 66, and an outer wall of this portion of the drainage pipeline 69 is surrounded by the circulating water within the third chamber 66. In this case, the circulating water sprayed out by the spray arm 64 can flow back to the water tank 61 after being utilized externally, and the circulating water that returns to the water tank 61 can be referred to as wastewater, with the drainage pump 68 being configured to discharge the wastewater from the water tank 61 via the drainage pipeline 69.

The specific process of heating the circulating water before discharge may be described as follows. First, the reversing device 1 is in the first operation state, and the circulating water enters the water tank 61 through an inlet. Under the action of the circulation water pump 63, the circulating water reaches the second chamber 62 and is heated under the action of the second heat exchanger 3. The heated circulating water then reaches both the spray arm 64 and the third chamber 66 via the circulation water pump 63. The circulating water flowing to the spray arm 64 is sprayed out under the action of the circulation water pump 63 and returns to the water tank 61 after being utilized externally (at this time, referred to as wastewater, and the inlet of the water tank 61 will not receive new circulating water). The circulating water flowing to the third chamber 66 is temporarily stored in the third chamber 66. After the drainage pump 68 and the drainage pipeline 69 discharge the wastewater from the water tank 61, the reversing device 1 is adjusted to the second operation state, allowing the circulating water in the third chamber 66 to flow through the water tank 61 to the second chamber 62, providing heat to the second heat exchanger 3.

By adopting this scheme, when the wastewater passes through the portion of the drainage pipeline 69 located in the third chamber 66, the heat in the wastewater can be transferred to the circulating water in the third chamber 66 via the drainage pipeline 69, utilizing the heat in the wastewater during the drainage process to maintain the temperature of the circulating water in the third chamber 66. On one hand, this is beneficial for increasing the total heat that the circulating water can transfer to the second heat exchanger 3, and on the other hand, it is beneficial for increasing the heat transfer rate between the circulating water and the second heat exchanger 3.

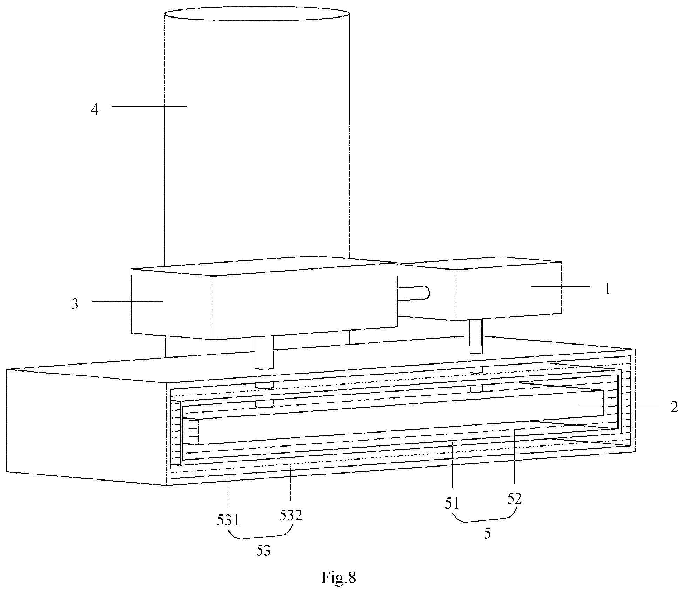

FIG. 8 is a schematic diagram of a phase-change heat pump system according to an embodiment of the present application. As shown in FIG. 8, the phase-change heat exchanger 5 in the phase-change heat pump system may also include an auxiliary heat exchange assembly 53. The auxiliary heat exchange assembly 53 may include a fourth chamber 531 and a heat exchange medium 532, with the heat exchange medium 532 being disposed in the fourth chamber 531. The auxiliary heat exchange assembly 53 is in contact with the first chamber 51 for heat exchange with the phase-change heat exchanger 5 to heat the phase-change material 52 in the first chamber 51.

In some embodiments, as shown in FIG. 8, the first chamber 51 is located inside the fourth chamber 531, such that a third space is formed between the first chamber 51 and inner walls of the fourth chamber 531, in which the heat exchange medium 532 is disposed, and at least a portion of the first chamber 51 is immersed in the heat exchange medium 532. The heat exchange medium 532 is used to heat the phase-change material 52 in the first chamber 51.

In an embodiment, the fourth chamber 531 may be in communication with the circulation water pump 63 or the third chamber 66, allowing the heated circulating water from the second chamber 62 to flow to the fourth chamber 531 via the circulation water pump 63 or the third chamber 66, and be stored in the fourth chamber 531. At this point, the heat exchange medium 532 is the heated circulating water.

In an embodiment, the fourth chamber 531 is not in communication with the circulation water pump 63 or the third chamber 66, but is in communication with an external heat exchange medium supply device, which continuously supplies the heat exchange medium 532 to the fourth chamber 531. No specific limitations are placed herein on this heat exchange medium supply device.

By adopting this scheme, the heat exchange medium 532 transfers heat to the phase-change material 52 through the first chamber 51. On one hand, when the first heat exchanger 2 performs the evaporation function, the time for the phase-change material 52 to change from liquid to solid can be extended, increasing the duration of heat release from the phase-change material 52, thereby increasing the duration for the first heat exchanger 2 to perform the evaporation function, which in turn prolongs the heating time for the circulating water by the second heat exchanger; on the other hand, when the first heat exchanger 2 performs the condensation function, the heat exchange medium 532 can also provide heat to the phase-change material 52, which is conducive to accelerating the regeneration rate of the phase-change material 52, thereby improving the operational efficiency of the phase-change heat pump system.

In some other embodiments, the first chamber 51 may be located outside the fourth chamber 531. In this case, an outer surface of the first chamber 51 contacts an outer surface of the fourth chamber 531 to achieve heat exchange. By adopting this scheme, it is conducive to reducing the difficulty of production and assembly of various components of the phase-change heat exchanger 5.

In some embodiments, the auxiliary heat exchange assembly 53 may also include a micro drainage pump, which is in communication with the fourth chamber 531. The micro drainage pump may be unidirectionally connected to the water tank, meaning that the micro drainage pump can discharge the heat exchange medium 532 to the water tank 61 without allowing the circulating water in the water tank 61 to enter the fourth chamber 531 via the micro drainage pump. By adopting this scheme, the circulating flow of the heat exchange medium 532 in the fourth chamber 531 can be achieved, which is beneficial for timely discharging the heat exchange medium 532 of lower temperature and reintroducing the heat exchange medium 532 of higher temperature, thereby ensuring a continuous and efficient transfer of heat to the phase-change material 52.

In an embodiment, one port of the micro drainage pump is in communication with the fourth chamber 531, and another port is in communication with the outside (not in communication with the water tank 61). In this way, the heat exchange medium 532 can be directly discharged to prevent from mixing with the circulating water or wastewater in the water tank 61. It is also helpful to simplify the connection relationship between the components of the phase-change heat pump system, reducing the installation difficulty of the system.

In the scheme according to the embodiments of the present application, the reversing device 1 is in the first operation state until the phase-change material 52 transitions to solid, the reversing device 1 is adjusted to the second operation state, so as to allow the first heat exchanger 2 to heat the phase-change material 52, thereby achieving the active heating of the phase-change material 52. By adopting this scheme, the method of actively heating the phase-change material by the first heat exchanger has a higher heating efficiency compared to the passive heating methods (natural air heating, circulating water heating, air heating, etc.) in the related art, significantly shortening the heating time of the phase-change material 52, which is conducive to improving the operational efficiency of the phase-change heat pump system.

Based on the same technical concept, an embodiment of the present application provides a terminal device, which includes a phase-change heat pump system according to any of the embodiments of the present application.

In some embodiments, the terminal device is a washing device, which may further include a base, a housing, and a partition. The partition is located between the base and the housing, and the partition may be connected to the base in a sealed manner and may also connected to the housing in a sealed manner. A receiving cavity is formed between the partition and the base, and the phase-change heat pump system is located within the receiving cavity. A washing cavity is formed between the partition and the housing, and the washing cavity is configured for a washing process for target items. As an example, the washing device may be a dishwasher, a laundry machine, etc.

As an example, when the washing device is a dishwasher, the target items are tableware to be cleaned. Specifically, the tableware to be cleaned is placed in the washing cavity of the dishwasher, and outlets of the spray arm 64 are in communication with the water tank 61 through the washing cavity. The circulating water sprayed from the outlets of the spray arm 64 completes the cleaning of the tableware in the washing cavity and then returns to the water tank 61, from where the circulating water is then discharged by the drainage pump 68 and the drainage pipeline 69. No specific limitations are placed here on the structure of the dishwasher.

In an embodiment, in addition to a washing device such as a dishwasher and a laundry machine, the terminal device may also be refrigeration equipment, heating equipment, etc.

Those of ordinary skill in the art will appreciate that all or part of the steps to implement the aforementioned embodiments may be accomplished through hardware or may be completed by instructing the associated hardware through a program, which can be stored in a computer-readable storage medium, where the aforementioned storage medium may be a read-only memory, a disk, or an optical disc, etc.

The above-described are only some preferred embodiments of the present application and are not intended to limit the present application. Any modifications made within the principle of the present application shall fall within the scope of the present application.

## Claims

1. A phase-change heat pump system, **characterized in that** the phase change heat pump system comprises:
a reversing device (1), having a first reversing port (11), a second reversing port (12), a third reversing port (13), and a fourth reversing port (14);
a first heat exchanger (2), having a first heat exchange port (21) in communication with the first reversing port (11) and a second heat exchange port (22);
a second heat exchanger (3), having a third heat exchange port (31) in communication with the second heat exchange port (22) and a fourth heat exchange port (32) in communication with the second reversing port (12);
a compressor (4), the compressor (4) having an air intake port (4A) in communication with the third reversing port (13) and an air exhaust port (4B) in communication with the fourth reversing port (14); and
a phase-change heat exchanger (5), comprising a first chamber (51) and a phase-change material (52) in the first chamber (51) for heat exchange with the first heat exchanger (2), wherein: when the reversing device (1) is in a first operation state, the air intake port (4A) is in communication with the first heat exchanger (2), and the air exhaust port (4B) is in communication with the second heat exchanger (3), and
when the reversing device (1) is in a second operation state, the air intake port (4A) is in communication with the second heat exchanger (3), and the air exhaust port (4B) is in communication with the first heat exchanger (2).

2. The phase-change heat pump system of claim 1, wherein the first heat exchanger (2) is located inside the first chamber (51), a first space is formed between the first heat exchanger (2) and the first chamber (51), in which the phase-change material (52) is located, and at least a portion of the first heat exchanger (2) is immersed in the phase-change material (52).

3. The phase-change heat pump system of claim 1 or 2, further comprising a water circulation subsystem (6), the water circulation subsystem (6) comprising a water tank (61), a second chamber (62), a circulation water pump (63), and a spray arm (64), wherein:
the water tank (61), the second chamber (62), and the circulation water pump (63) are in communication with each other, and the second chamber (62) is in thermal communication with the second heat exchanger (3); and
when the reversing device (1) is in the first operation state, the water tank (61) is not in communication with the circulation water pump (63), and the circulation water pump (63) is in communication with the spray arm (64), and
when the reversing device (1) is in the second operation state, the water tank (61) is in communication with the circulation water pump (63), and the circulation water pump (63) is not in communication with the spray arm (64).

4. The phase-change heat pump system of claim 3, wherein the water circulation subsystem (6) further comprises a reversing valve (65), and the reversing valve (65) is connected to the water tank (61), the circulation water pump (63), and the spray arm (64).

5. The phase-change heat pump system of claim 3, wherein the water circulation subsystem (6) further comprises a third chamber (66) in communication with the circulation water pump (63) and connected to the water tank (61); and
when the reversing device (1) is in the first operation state, the water tank (61) is not in communication with the third chamber (66), and
when the reversing device (1) is in the second operation state, the third chamber (66) is in communication with the water tank (61).

6. The phase-change heat pump system of claim 5, wherein the water circulation subsystem (6) further comprises a second check valve (67) in communication with each of the water tank (61) and the third chamber (66).

7. The phase-change heat pump system of claim 5, wherein circulating water sprayed out by the spray arm (64) returns to the water tank (61), and the water circulation subsystem (6) further comprises a drainage pump (68) and a drainage pipeline (69); and
the drainage pump (68) is in communication with each of the water tank (61) and the drainage pipeline (69), with at least a portion of the drainage pipeline (69) passing through the third chamber (66).

8. The phase-change heat pump system of claim 1 or 2, wherein the phase-change heat exchanger (5) further comprises an auxiliary heat exchange assembly (53), the auxiliary heat exchange assembly (53) comprising a fourth chamber (531) and a heat exchange medium (532) filled in the fourth chamber (531); and
the auxiliary heat exchange assembly (53) is configured for heat exchange with the phase-change heat exchanger (5).

9. The phase-change heat pump system of claim 8, wherein the first chamber (51) is located inside the fourth chamber (531), a third space is formed between the first chamber (51) and the fourth chamber (531), in which the heat exchange medium (532) is disposed, and at least a portion of the first chamber (51) is immersed in the heat exchange medium (532).

10. A terminal device, comprising the phase-change heat pump system of any one of claims 1 to 9.

11. The terminal device of claim 10, wherein the terminal device is a washing device, the washing device further comprising a base, a housing, and a partition;
the partition is located between the base and the housing, and a receiving cavity is formed between the partition and the base; and
the phase-change heat pump system is located within the receiving cavity, and a washing cavity is formed between the partition and the housing for a washing process for target items.
